# EUROPÄISCHE PATENTSCHRIFT

(11) **EP 3 514 943 B1**
(45) Veröffentlichungstag und Bekanntmachung des Hinweises auf die Patenterteilung: **14.04.2021**
(21) Anmeldenummer: 18152738.3
(22) Anmeldetag: 22.01.2018
(51) Int. Cl.: H02M 7/5387, H02M 1/084, H02M 7/483, H02M 7/493

(54) **UMRICHTERANORDNUNG MIT EINER VIELZAHL STEUERBARER LEISTUNGSHALBLEITERSCHALTER SOWIE VERFAHREN ZUM BETRIEB DER UMRICHTERANORDNUNG**
CONVERTER DEVICE WITH A PLURALITY OF CONTROLLABLE POWER SEMICONDUCTOR SWITCHES, METHOD FOR OPERATING THE CONVERTER DEVICE
DISPOSITIF CONVERTISSEUR POURVU D'UNE PLURALITÉ DE SEMI-CONDUCTEURS DE PUISSANCE POUVANT ÊTRE COMMANDÉS AINSI QUE PROCÉDÉ DE FONCTIONNEMENT DU DISPOSITIF CONVERTISSEUR

(43) Veröffentlichungstag der Anmeldung: 24.07.2019
(73) Patentinhaber: Siemens Energy Global GmbH & Co. KG, 81739 München (DE)
(72) Erfinder: Döring, David, 91058 Erlangen (DE); Giering, Gerald Franz, 90562 Kalchreuth (DE); Würflinger, Klaus, 90419 Nürnberg (DE)

(56) Entgegenhaltungen:
- EP-A2- 1 995 863
- US-A1- 2011 267 854
- US-A1- 2013 223 115
- US-A1- 2014 169 053
- US-A1- 2015 023 080

## Beschreibung

Die Erfindung betrifft ein Verfahren zum Steuern steuerbarer Leistungshalbleiterschalter einer Umrichteranordnung mit einer Vielzahl von Schaltmodulen mit steuerbaren Leistungshalbleiterschaltern.

Die Aufgabe der Erfindung ist es, ein solches Verfahren bereitzustellen, das einen möglichst zuverlässigen Betrieb der Umrichteranordnung ermöglicht.

Die Aufgabe wird erfindungsgemäß durch das Verfahren von Anspruch 1 und die Umrichteranordnung von Anspruch 5 gelöst, wobei die Umrichteranordnung ein Steuerungssystem aufweist.

Es wird demnach ein Steuerungssystem zum Steuern einer Vielzahl steuerbarer Einheiten bereitgestellt, mit einer zentralen Steuerungseinrichtung und einer Vielzahl von Steuerungsmodulen, die jeweils einer der zu steuernden Einheiten zugeordnet sind, wobei die zentrale Steuerungseinrichtung zum Austausch digitaler Daten mit jedem Steuerungsmodul eingerichtet ist.

Ein solches Steuerungssystem ist aus der Umrichtertechnik bekannt. Umfasst eine Umrichteranlage steuerbare elektronische Schalter, so werden diese üblicherweise im Betrieb der Umrichteranlage mittels der Steuerungsmodule angesteuert, zu leiten und zu sperren. Auf diese Weise können sogenannte Umrichterventile realisiert werden. Die zentrale Steuerungseinrichtung hat dabei eine regelnde und koordinierende Funktion. Bei dem bekannten Steuerungssystem ist die zentrale Steuerungseinrichtung über eigene, dafür vorgesehene Kommunikationsleitungen mit jedem der Steuerungsmodule verbunden. Dies bringt jedoch den Nachteil mit sich, dass eine Vielzahl von Kommunikationsleitungen innerhalb der Umrichteranlage verlegt und zur zentralen Steuerungseinrichtung geführt werden muss. Jede der Kommunikationsleitungen muss dabei eine definierte und festgelegte Länge aufweisen. Dies vermindert die Flexibilität des Aufbaus des bekannten Steuerungssystems. Zudem gilt, dass eine häufige Ursache von Fehlern in der Umrichteranlage ein Ausfall der Kommunikation zwischen der zentralen Steuerungseinrichtung und einem der Steuerungsmodule ist. Um solche Fehler zu vermeiden, müsste jede der Kommunikationsleitungen redundant, beispielsweise doppelt ausgeführt sein. Dies würde jedoch den Aufwand und die Kosten weiter erhöhen.
In der US 2013/0223115 A1 ist ein Kommunikationsnetzwerk offenbart, bei dem die Steuerungsmodule in einer Ringkette ('daisy-chain') angeordnet sind. Die Kommunikation erfolgt dabei entlang des Rings.

Eine weiteres Steuerungsnetzwerk mit einer Ringstruktur ist in der EP 1 995 863 A2 offenbart.

Ein hierarchisches Steuerungsnetzwerk ist in der US 2015/0023080 A1 beschrieben. Eine Steuerung, bei dem eine zentrale Systemsteuerung Steuerungssignale an alle Empfänger übermittelt, ist aus der US 2014/0169053 A1 bekannt.

Eine Steuerungs-Ringstruktur, bei der die Information wahlweise in oder gegen Uhrzeigerrichtung erfolgen kann, ist in der US 2011/0267854 A1 offenbart.

Die Steuerungsmodule bilden ein Verbindungsnetzwerk, wobei jedes Steuerungsmodul mit mehr als einem weiteren Steuerungsmodul über eine Kommunikationsleitung verbunden ist, so dass ein Datenaustausch zwischen ihnen möglich ist, eines der Steuerungsmodule als Masterknoten des Verbindungsnetzwerks direkt mit der zentralen Steuerungseinrichtung verbunden ist, und die Steuerungsmodule dazu eingerichtet sind, ein hierarchisches Kommunikationsnetzwerk mit einer Baumstruktur innerhalb des Verbindungsnetzwerks auszubilden, so dass der Datenaustausch zwischen der zentralen Steuerungseinrichtung und jedem Steuerungsmodul über einen diesem Steuerungsmodul zugeordneten Kommunikationsweg innerhalb des Kommunikationsnetzwerks durchführbar ist. Das erfindungsgemäße Steuerungssystem umfasst demnach Steuerungsmodule, die zu einem Verbindungsnetzwerk miteinander verbunden sind. Die Steuerungsmodule weisen zweckmäßigerweise Schnittstellen auf, die einen Anschluss der Kommunikationsleitungen ermöglichen. Das als Masterknoten festgelegte Steuerungsmodul ist direkt mit der zentralen Steuerungseinrichtung verbunden. Alle übrigen Steuerungsmodule sind über den Masterknoten mit der zentralen Steuerungseinrichtung verbunden. Die Steuerungsmodule sind zweckmäßigerweise dazu eingerichtet, empfangene Daten weiter zu leiten. Auf diese Weise können die Steuerungsmodule bei der Kommunikation bzw. Datenaustausch eine Routing-Funktion für nachgeschaltete Steuerungsmodule übernehmen. Im Rahmen der Erfindung können auch mehr als ein Masterknoten definiert werden, wobei jedes der Masterknoten-Steuerungsmodule direkt mit der zentralen Steuerungseinrichtung verbunden ist.

Die Anordnung der Steuerungsmodule im Verbindungsnetzwerk bedeutet im Allgemeinen, dass es mehrere mögliche Wege im Verbindungsnetzwerk zwischen dem Masterknoten und jedem Steuerungsmodul gibt. Um für jedes Steuerungsmodul einen eindeutigen Kommunikationsweg festzulegen, bilden die Steuerungsmodule geeigneterweise ein hierarchisches Kommunikationsnetzwerk mit einer Baumstruktur im Sinne eines Kommunikationsbaumes aus. Als Baum wird in diesem Zusammenhang eine Netzwerk- oder Graphenstruktur verstanden, die keine geschlossenen Kommunikations-Rundwege enthält. Es werden demnach innerhalb des Verbindungsnetzwerks nur einige, nicht jedoch alle, Kommunikationsleitungen benutzt. Beispielsweise kommuniziert der Masterknoten mit mehreren Steuerungsmodulen, mit denen er im Verbindungsnetzwerk benachbart ist, also jeweils direkt mittels einer Kommunikationsleitung verbunden ist, wobei diese Steuerungsmodule jedoch nicht miteinander kommunizieren. Jedes der Steuerungsmodule legt selbsttätig unter allen benachbarten Steuerungsmodulen eines als das übergeordnete Steuerungsmodul fest, von dem es dann im Betrieb des Steuerungssystems Daten empfängt. Diese Festlegung erfolgt geeigneterweise anhand bestimmter Kriterien, wie beispielsweise der physikalischen Entfernung zwischen dem Steuerungsmodul und dem Masterknoten. Im weiteren Betrieb des Steuerungssystems werden die übrigen Kommunikationsleitungen zunächst nicht verwendet. Alternativ können auch diese übrigen Kommunikationsleitungen verwendet werden, die darüber übermittelten Informationen bzw. Daten werden jedoch von den empfangenden Steuerungsmodulen ignoriert bzw. nicht verwendet.

Ein Vorteil des Steuerungssystems ist die verringerte Gesamtlänge der benötigten Kommunikationsleitungen gegenüber dem bekannten Steuerungssystem. Üblicherweise ist die Entfernung der Steuerungsmodule zueinander viel kleiner als die Entfernung zwischen einem der Steuerungsmodule und der zentralen Steuerungseinrichtung. Durch die Struktur des Verbindungsnetzwerks muss zwar die Anzahl der einzelnen Kommunikationsleitungen unter Umständen erhöht werden. Dafür können diese jedoch erheblich kürzer ausgeführt sein. Ein weiterer Vorteil des Steuerungssystems ist darin zu sehen, dass es stets mehrere Möglichkeiten gibt, das Kommunikationsnetzwerk innerhalb des Verbindungsnetzwerks auszubilden. Bei Ausfall eines der Steuerungsmodule kann das fehlerhafte Steuerungsmodul bzw. eine fehlerhafte Kommunikationsleitung durch eine Neuausbildung des Kommunikationsnetzwerks umgangen werden, ohne, dass die Funktionsfähigkeit des gesamten Steuerungssystems beeinträchtigt wird.

Vorzugsweise ist jedes Steuerungsmodul dazu eingerichtet, eine Übertragungszeit von Daten auszuwerten, die dieses Steuerungsmodul von unterschiedlichen im Verbindungsnetzwerk benachbarten Steuerungsmodulen empfängt, so dass ein kürzester Kommunikationsweg für jedes Steuerungsmodul ermittelbar ist. Demnach wählt das Steuerungsmodul als übergeordnetes Steuerungsmodul dasjenige aus, von dem es am schnellsten übermittelte Daten empfängt. Ist beispielsweise ein Steuerungsmodul mit drei anderen Steuerungsmodulen mittels der Kommunikationsleitungen verbunden, so empfängt das Steuerungsmodul zunächst Steuerungsdaten der zentralen Steuerungseinrichtung von allen drei benachbarten Steuerungsmodulen und wertet diese aus. Dabei ist das Steuerungsmodul zweckmäßigerweise dazu eingerichtet, zu erkennen, von welchem benachbarten Steuerungsmodul die empfangenen Daten zuerst empfangen wurden. Das entsprechende benachbarte Steuerungsmodul kann als das übergeordnete Steuerungsmodul definiert werden. Auf diese Weise kann der kürzeste Kommunikationsweg für jedes Steuerungsmodul bestimmt werden. Dem jeweils ausgewählten übergeordneten Steuerungsmodul wird die Auswahl geeigneterweise mitgeteilt. Für den Masterknoten entfällt diese Prozedur, da dieses direkt mit der zentralen Steuerungseinrichtung verbunden ist. Diese Vorgehensweise hat den Vorteil, dass sie einen besonders schnellen Datenaustausch ermöglicht.

Zur Erhöhung der Redundanz ist es denkbar, mehr als einen Masterknoten zu definieren. Auch kann die Datenverbindung bzw. Kommunikationsleitung zwischen dem Masterknoten und der zentralen Steuerungseinrichtung redundant, also mit mehreren parallelen Leitungen, ausgeführt sein.

Gemäß einer Ausführungsform der Erfindung sind einige, besonders bevorzugt alle Kommunikationsleitungen, Lichtwellenleiter. Lichtwellenleiter haben den Vorteil, dass sie besonders geeignet für Umgebungen sind, wo hohe elektrische Potenziale auftreten. Dementsprechend kann der Datenaustausch mittels Lichtsignale erfolgen.

Als besonders geeignet wird angesehen, wenn die Steuerungsmodule zum digitalen Verarbeiten der Daten ausgebildet sind. Demnach können die Steuerungsmodule die Daten nicht nur empfangen und weiterleiten, sondern auch verarbeiten. Dies bedeutet beispielsweise, dass das Steuerungsmodul beispielsweise zur Durchführung einer oder mehreren Operationen eingerichtet ist: zu einer Auswahl eines Maximums und/oder Minimums, einer Summenbildung, einer Produktbildung, Ausführung einer ODER-Funktion, einer UND-Funktion, einer NOT-Funktion, einer Bildung von Schnittmengen, einer Bildung von Vereinigungsmengen oder dergleichen. Auf diese Weise kann vorteilhaft ein Teil der Datenverarbeitung der Steuerung in den Steuerungsmodulen selbst durchgeführt werden.

Gemäß einer Ausführungsform der Erfindung ist jedes Steuerungsmodul mit drei weiteren Steuerungsmodulen verbunden. Im Verbindungsnetzwerk weist jedes Steuerungsmodul damit wenigstens drei, bevorzugt genau drei benachbarte Steuerungsmodule. Im Allgemeinen gilt, dass eine stärkere Vernetzung der Steuerungsmodule einen höheren Vernetzungsaufwand bedeutet aber eine höhere Ausfallsicherheit gewährleistet. Die Anzahl von genau drei benachbarten Steuerungsmodulen für jedes Steuerungsmodul bietet einen besonders guten Kompromiss zwischen dem genannten Vor- und Nachteil.

Vorzugsweise sind die Steuerungsmodule zu einem bidirektionalen Datenaustausch eingerichtet. Damit können auch die Steuerungsmodule bestimmte Daten an die zentrale Steuerungseinrichtung übermitteln. Beispielsweise können die Steuerungsmodule Informationen über den Zustand der zu steuernden Einheiten erfassen und an die zentrale Steuerungseinrichtung senden. Damit können die Steuerungsmodule einen Teil einer Regelungsrückkopplung übernehmen.

Die Erfindung betrifft ferner eine Umrichteranordnung mit einer Vielzahl von Schaltmodulen mit steuerbaren Leistungshalbleiterschaltern.

Eine solche Umrichteranordnung ist beispielsweise aus der WO 2016/155850 A1 bekannt. Der Umrichter der bekannten Umrichteranordnung ist ein sogenannter modularer Mehrstufenumrichter (MMC). Der MMC umfasst Umrichterventile, die sich jeweils zwischen einem Wechselspannungsanschluss und einem von zwei Gleichspannungspolen des MMC erstrecken. Die Umrichterventile des MMC weisen jeweils eine Reihenschaltung zweipoliger Schaltmodule auf, wobei jedes Schaltmodul ein- und abschaltbare Leistungshalbleiterschalter sowie einen Energiespeicher, bevorzugt in Form eines Schaltmodulkondensators, umfasst. Jedes der Schaltmodule ist mittels eines Steuerungsystems einzeln ansteuerbar. Eine an dem Umrichterventil abfallende Spannung ist gleich der Summe von Spannungen, die an den zugehörigen Schaltmodulen abfallen. Mittels des MMC ist eine besonders vorteilhafte stufenförmige Konverterspannung erzeugbar. Die Schaltmodule sind meist als Halbbrückenschaltungen oder als Vollbrückenschaltungen ausgebildet. Das Schaltmodul in Halbbrückenschaltung weist zwei abschaltbare Leistungshalbleiterschalter und den Energiespeicher auf, wobei die Leistungshalbleiterschalter so mit dem Energiespeicher verschaltet sind, dass an den Ausgangsklemmen des Schaltmoduls eine an dem Energiespeicher abfallende Energiespeicherspannung oder eine Nullspannung erzeugbar ist. Umrichteranordnungen dieser Art werden üblicherweise zur Stromumwandlung, beispielsweise in der Hochspannungsgleichstromübertragung, als auch zur Blindleistungskompensation bzw. Stabilisierung von Wechselspannungsnetzen eingesetzt. In solchen Fällen ist der Umrichterarm beispielsweise zwischen zwei Wechselspannungsanschlüssen des Umrichters angeordnet.

Ein weiteres Beispiel einer artgemäßen Umrichteranordnung ist aus der EP 0 299 275 B1 bekannt. Dort ist ein Umrichter beschrieben, dessen Umrichterventile Thyristoren umfassen, die in Gehäusen in Form von Modulen angeordnet sind. Die Module sind zu Ventiltürmen zusammengefasst, die in einer Ventilhalle montiert sind.

Im Allgemeinen ist bei den bekannten Umrichteranordnungen jedem der Leistungshalbleiterschalter jeweils ein Steuerungsmodul zugeordnet, das von einer zentralen Steuerungseinrichtung der Umrichteranordnung Steuersignale zur Ansteuerung der Leistungshalbleiterschalter empfängt. Die steuerbaren Leistungshalbleiterschalter werden gemäß den Steuersignalen mittels der Steuerungsmodule angesteuert, zu vorbestimmten Zeitpunkten die Leistungshalbleiterschalter zu aktivieren (leiten) oder, falls möglich, zu sperren.

Die Aufgabe der Erfindung ist es, eine solche Umrichteranordnung vorzuschlagen, die möglichst kostengünstig und zuverlässig ist.

Die Aufgabe wird erfindungsgemäß bei einer artgemäßen Umrichteranordnung durch das erfindungsgemäße Steuerungssystem gelöst, wobei jedem der Schaltmodule ein Steuerungsmodul zugeordnet ist und das Steuerungssystem zum Ansteuern der Leistungshalbleiterschalter der Schaltmodule eingerichtet ist.

Die Vorteile der erfindungsgemäßen Umrichteranordnung ergeben sich insbesondere aus den zuvor beschriebenen Vorteilen des erfindungsgemäßen Steuerungssystems.

Als besonders vorteilhaft wird angesehen, wenn bei der Umrichteranordnung wenigstens ein fluiddichtes Kapselungsgehäuse vorgesehen ist, in dem zumindest einige der Leistungshalbleiterschalter unter Ausbildung einer modularen Umrichtereinheit angeordnet sind, und das Kapselungsgehäuse zum elektrischen Isolieren der darin angeordneten Leistungshalbleiterschalter zumindest teilweise mit einer elektrisch isolierenden Isolierflüssigkeit gefüllt ist, wobei der Masterknoten des Verbindungsnetzwerks außerhalb des Kapselungsgehäuses und die übrigen Steuerungsmodule innerhalb des Kapselungsgehäuses angeordnet sind. Das Steuerungssystem der erfindungsgemäßen Umrichteranordnung erlaubt vorteilhaft eine modulare Ausgestaltung der Umrichteranordnung. Es müssen demnach keine Punkt-zu-Punkt-Verbindungen zwischen der zentralen Steuerungseinrichtung und den einzelnen Steuerungsmodulen verlegt werden. Stattdessen ist lediglich eine oder, in einer redundanten Ausführung, zwei oder mehr Kommunikationsleitungen zwischen der zentralen Steuerungseinrichtung und dem Masterknoten vorgesehen. Dabei ist der Masterknoten außerhalb des Kapselungsgehäuses angeordnet. Alle anderen Kommunikationsleitungen befinden sich innerhalb des Kapselungsgehäuses. Die Kommunikationsleitungen vom Masterknoten zu dessen benachbarten Steuerungsmodulen befinden sich dabei teilweise, alle übrigen Kommunikationsleitungen befinden sich vollständig innerhalb des Kapselungsgehäuses. Denkbar ist jedoch auch, die zum Masterknoten benachbarten Steuerungsmodule außerhalb des Kapselungsgehäuses anzuordnen. Die Umrichtereinheiten sind im Gegensatz zu Ventilhallen, die aus dem Stand der Technik bekannt sind, transportierbar. Somit lässt sich die Inbetriebnahme der Umrichteranordnung vorteilhaft vereinfachen. Es ist beispielsweise denkbar, dass jedes Umrichterventil mit dem zugeordneten Kapselungsgehäuse eine modulare Umrichtereinheit ausbildet. Die modularen Umrichtereinheiten können miteinander unter Ausbildung des Umrichters verbunden werden. Das Kapselungsgehäuse weist aufgrund der Fluidisolation vorteilhafterweise wesentlich kleinere Abmessungen als die bekannte Ventilhalle auf. Beispielsweise können die Isolationsabstände auf ca. ein Drittel in besonders günstigen Fällen sogar um den Faktor zehn reduziert werden. Der einfache Aufbau und kleinere Abmessungen erlauben vorteilhaft einen Kostenvorteil gegenüber den bisher bekannten Lösungen. Insbesondere können alle Leistungshalbleiterschalter in einem oder mehreren Kapselungsgehäusen untergebracht sein. Das oder die Kapselungsgehäuse können vollständig mit der Isolierflüssigkeit, die beispielsweise ein Ester enthält, gefüllt sein. Die Leistungshalbleiterschalter der Umrichteranordnung sind vorzugsweise ein- und abschaltbare Leistungshalbleiterschalter, wie zum Beispiel IGBTs, IGCTs, oder Thyristoren.

Gemäß einer Ausführungsform der Erfindung ist bilden die Umrichterventile einen modularen Mehrstufenumrichter. Dazu weist jeder der Umrichterventile eine Reihenschaltung von zweipoligen Schaltmodulen auf, wobei jedes Schaltmodul wenigstens zwei Leistungshalbleiterschalter sowie einen Energiespeicher umfasst, wobei zumindest einige der Schaltmodule in dem wenigstens einen Kapselungsgehäuse angeordnet sind. Auf diese Weise ist eine zweistufige Modulbauweise des Umrichters bereitgestellt, bei der die Umrichterventile mit den Schaltmodulen modular aufgebaut sind (1. Stufe der Modularisierung), und der Umrichter des Weiteren die modularen Umrichtereinheiten aufweist (2. Stufe der Modularisierung). Der Umrichter kann zum Beispiel ein eingangs beschriebener modularer Mehrstufenumrichter sein. Dabei können die Umrichterventile Schaltmodule mit Halbbrückenschaltungen und/oder mit Vollbrückenschaltungen umfassen, wobei auch andere Schaltmodul-Topologien denkbar sind.

Vorzugsweise umfasst die Umrichteranordnung mehrere modulare Umrichtereinheiten, wobei zumindest einige der modularen Umrichtereinheiten miteinander mittels gasisolierten oder flüssigkeitsisolierten elektrischen Leitungen unter Ausbildung des Umrichters der Umrichteranordnung, beispielsweise eines modularen Mehrstufenumrichters, verbindbar sind. Durch die Verwendung der gasisolierten oder flüssigkeitsisolierten elektrischen Leitungen zur Verbindung der einzelnen Umrichtereinheiten kann vorteilhaft auf die Verwendung von Hochspannungsdurchführungen verzichtet werden. Dies senkt die Kosten der Umrichteranordnung. Das Isoliermedium der Leitungen ist bevorzugt gleich mit dem Isoliermedium in dem Kapselungsgehäuse.

Zweckmäßigerweise umfasst die Umrichteranordnung ferner wenigstens eine weitere Hochspannungskomponente, wobei die modulare Umrichtereinheit mittels wenigstens einer gasisolierten oder flüssigkeitsisolierten elektrischen Leitung mit der Hochspannungskomponente elektrisch verbindbar ist. Demnach werden weitere Komponenten der Umrichteranordnung, wie beispielsweise Transformatoren oder Schaltanlagen, mittels gleichartiger Leitungen mit dem Umrichter verbunden, wie die modularen Umrichtereinheiten untereinander. Dadurch kann eine weitere Vereinfachung des Aufbaus der Umrichteranordnung erreicht werden.

Die Vorteile des erfindungsgemäßen Verfahrens ergeben sich insbesondere aus den bereits beschriebenen Vorteilen der erfindungsgemäßen Umrichteranordnung und des erfindungsgemäßen Steuerungssystems.

Zur Ausbildung des Kommunikationsnetzwerks wertet jedes Steuerungsmodul zweckmäßigerweise die Daten, die es von den benachbarten Steuerungsmodulen empfängt. Dabei wird bevorzugt für jedes der Steuerungsmodule der Kommunikationsweg festgelegt, indem eine kürzeste Übertragungszeit für dieses Steuerungsmodul ermittelt wird. Demnach wählt das Steuerungsmodul als übergeordnetes Steuerungsmodul vorzugsweise dasjenige aus, von dem es am schnellsten übermittelte Daten empfängt. Dies bedeutet, dass das Steuerungsmodul zum Beispiel eine Zeitverzögerung ermitteln kann, die zwischen einem Sendezeitpunkt und einem Empfangszeitpunkt liegt. Eine bevorzugte Möglichkeit, den kürzesten Kommunikationsweg zu bestimmen ist es, wenn die Datenübertragung getaktet erfolgt, mit einer Taktverzögerung von weniger als 10 Mikrosekunden. Beispielsweise kann die zentrale Steuerungseinrichtung oder der Masterknoten die zu übermittelnden Daten mit einer definierten Zeitverzögerung senden bzw. weiterleiten, wobei die Daten mit einem Zählerwert versehen werden, der sich mit jedem Takt beispielsweise um eins erhöht. Auf diese Weise kann jedes Steuerungsmodul die empfangenen Daten vergleichen und aufgrund des Zählerwertes entscheiden, welches benachbarte Steuerungsmodul als übergeordnetes Steuerungsmodul zu wählen ist, um den kürzesten Kommunikationsweg zu erhalten, nämlich dasjenige von dem die Daten mit dem niedrigsten Zählerstand empfangen wurden. In dem Fall, in dem ein Steuerungsmodul Daten von zwei oder mehr benachbarten Steuerungsmodulen empfängt, die eine gleiche Zeitverzögerung aufweisen (zum Beispiel gleichen Takt-Zählerstand aufweisen), kann eine zusätzliche integrierte Logik dafür sorgen, dass eines dieser Steuerungsmodule als übergeordnetes Steuerungsmodul gewählt wird. Dies kann zum Beispiel durch eine Zufallsfunktion oder eine geeignete Vorbelegung erreicht werden. Zudem kann eine Schaltschwelle definiert werden, so dass ein Hin- und Herwechseln der Wahl des übergeordneten Steuerungsmoduls zwischen mehreren unterschiedlichen benachbarten Steuerungsmodulen vermieden wird.

Vorzugsweise wird bei Ausfall eines der Steuerungsmodule oder einer der Kommunikationsleitungen das hierarchische Kommunikationsnetzwerk neu ausgebildet. Fällt beispielsweise eine der Kommunikationsleitungen aus, so wird dies vom Steuerungssystem erkannt. Nachdem ein solcher Ausfall erkannt wurde, wird das Kommunikationsnetzwerk neu ermittelt bzw. ausgebildet, wobei entweder nur die betroffenen, also zur ausgefallenen Kommunikationsleitung benachbarten, oder alle Steuerungsmodule erneut das ihnen zugeordnete übergeordnete Steuerungsmodul auswählen bzw. bestimmen. Auf diese Weise entsteht eine neue Baumstruktur, so dass die fehlerbehaftete Kommunikationsleitung umgangen wird, ohne, dass die Steuerungsfunktion des Steuerungssystems beeinträchtigt wird. Ähnlich kann auch verfahren werden, wenn eines der Steuerungsmodule ausfällt.

Es ist darüber hinaus denkbar, dass zwischen den Steuerungsmodulen und der zentralen Steuerungseinrichtung Daten für eine Regelung der Umrichteranordnung übermittelt werden. Damit übernimmt das Steuerungssystem einen Teil der Regelungsfunktion.

Die Erfindung soll im Folgenden anhand der Figuren 1 bis 4 weiter erläutert werden.
Figur 1 zeigt ein Ausführungsbeispiel einer erfindungsgemäßen Umrichteranordnung in einer schematischen Übersichtsdarstellung;
Figur 2 zeigt ein Ausführungsbeispiel eines Umrichterventils für die Umrichteranordnung der Figur 1 in einer schematischen Darstellung;
Figur 3 zeigt ein Ausführungsbeispiel eines Steuerungssystems in einer schematischen Darstellung;
Figur 4 zeigt ein Kommunikationsnetzwerk für das Steuerungssystem der Figur 3 in einer schematischen Darstellung.

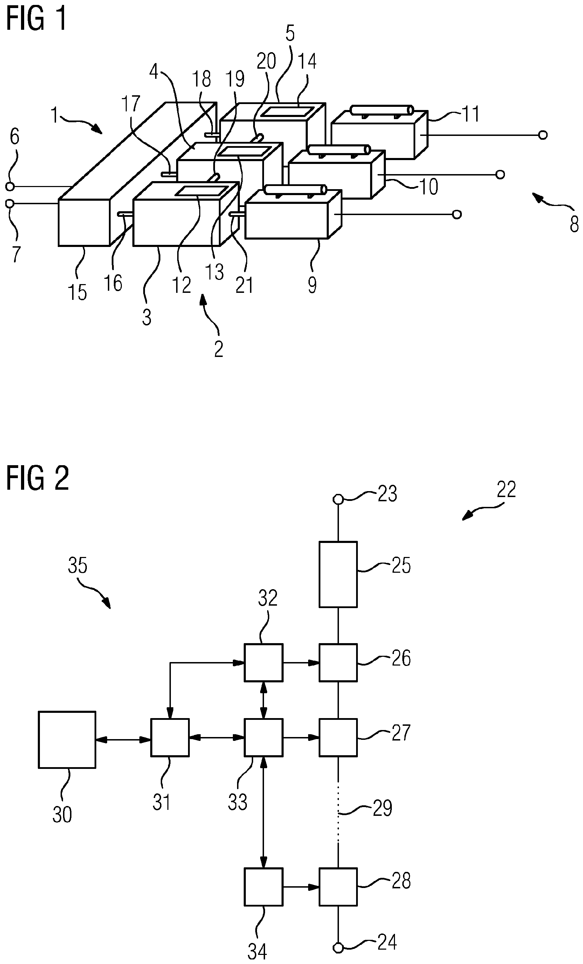

In Figur 1 ist eine Umrichteranordnung 1 dargestellt. Die Umrichteranordnung 1 umfasst einen Umrichter 2. Der Umrichter 2 umfasst drei modulare Umrichtereinheiten 3, 4 und 5. Die modularen Umrichtereinheiten 3-5 sind in diesem Beispiel gleichartig aufgebaut. Jede Umrichtereinheit 3-5 umfasst zwei Umrichterventile des Umrichters, die sich jeweils zwischen einem ersten oder einem zweiten Gleichspannungspol 6 bzw. 7 des Umrichters 2 und einem Wechselspannungsanschluss des Umrichters zum Verbinden des Umrichters mit wechselspannungsseitigen Komponenten der Umrichteranordnung erstrecken. In dem in Figur 1 dargestellten Ausführungsbeispiel sind die Umrichtereinheiten 3-5 wechselspannungsseitig mit Transformatoren 9-11 verbunden.

Jede modulare Umrichtereinheit 3-5 umfasst ein flüssigkeitsdichtes Kapselungsgehäuse. Jedes Kapselungsgehäuse ist mit einer Esterflüssigkeit gefüllt. Die Esterflüssigkeit dient einerseits zur elektrischen Isolierung der leistungselektronischen Komponenten der Umrichterventile, die im Kapselungsgehäuse angeordnet ist. Anderseits dient die Esterflüssigkeit zum Wärmetransport und damit zur Kühlung der Leistungshalbleiterschalter des Umrichters 2. Jedes Kapselungsgehäuse umfasst ferner einen Radiator 12, 13, 14 der den Wärmetransport nach außen verbessert.

Elektrische Verbindungen zwischen den Umrichtereinheiten 3-5 untereinander sowie mit den gleichspannungsseitigen Komponenten 15 (z.B. Drosseln oder Schaltanlagen) und mit den wechselspannungsseitigen Komponenten 9-11 (im dargestellten Beispiel Transformatoren), sind mittels fluidisolierten elektrischen Leitungen 16-21 realisiert. Aus Gründen der Übersichtlichkeit sind in Figur 1 nur einigen aber nicht alle elektrischen Verbindungen der Umrichteranordnung 1 grafisch dargestellt. Die Transformatoren 9-11 weisen jeweils ein Transformatorgehäuse auf, das flüssigkeitsdicht ist. Die elektrische Isolation innerhalb der Transformatorgehäuse kann durch eine Isolierflüssigkeit wie beispielsweise ein Isolieröl oder eine Esterflüssigkeit bereitgestellt sein.

Die Umrichteranordnung 1 weist einen Anschluss 8 zum Anschließen der Umrichteranordnung 1 an ein dreiphasiges Wechselspannungsnetz auf.

In Figur 2 ist ein Umrichterventil 22 dargestellt, dass in dem Umrichter 2 beziehungsweise in einer der Umrichtereinheiten 3 - 5 der Umrichteranordnung 1 der Figur 1 eingesetzt werden kann. Das Umrichterventil 22 umfasst einen Gleichspannungsanschluss bzw. Gleichspannungspol 23 und einen Wechselspannungsanschluss 24. Zudem umfasst das Umrichterventil 22 eine Glättungsinduktivität 25 in Form einer Drossel sowie eine Mehrzahl von Schaltmodulen 26, 27, 28. Die Anzahl der Schaltmodule ist nicht auf diejenige begrenzt, die in der Figur 2 grafisch dargestellt ist, was durch eine gepunktete Linie 29 angedeutet ist. Die Schaltmodule 26-28 sind im dargestellten Ausführungsbeispiel als dem Fachmann bekannte Halb- oder Vollbrückenschaltungen realisiert. Jedes Schaltmodul 26-28 umfasst damit steuerbare Leistungshalbleiterschalter sowie einen Energiespeicher in Form eines Kondensators.

In Figur 2 ist darüber hinaus ein Steuerungssystem 35 zur Ansteuerung der Leistungshalbleiterschalter der Schaltmodule 26-28 erkennbar. Das Steuerungssystem 35 umfasst eine zentrale Steuerungseinrichtung 30, die mit einer Vielzahl von Steuerungsmodulen 31-34 kommunizieren kann. Eines der Steuerungsmodule übernimmt dabei die Funktion eines Masterknotens 31, das direkt mit der zentralen Steuerungseinrichtung 30 verbunden ist. Jedem der Schaltmodule 26-28 ist ein Steuerungsmodul 32-34 zugeordnet, dass Schaltbefehle von der zentralen Steuerungseinrichtung 30 an die Leistungshalbleiterschalter der Schaltmodule 26-28 übermitteln kann. Die Schaltmodule 31-34 sind miteinander mittels Kommunikationsleitungen verbunden, die in Figur 2 durch Doppelpfeile dargestellt sind.

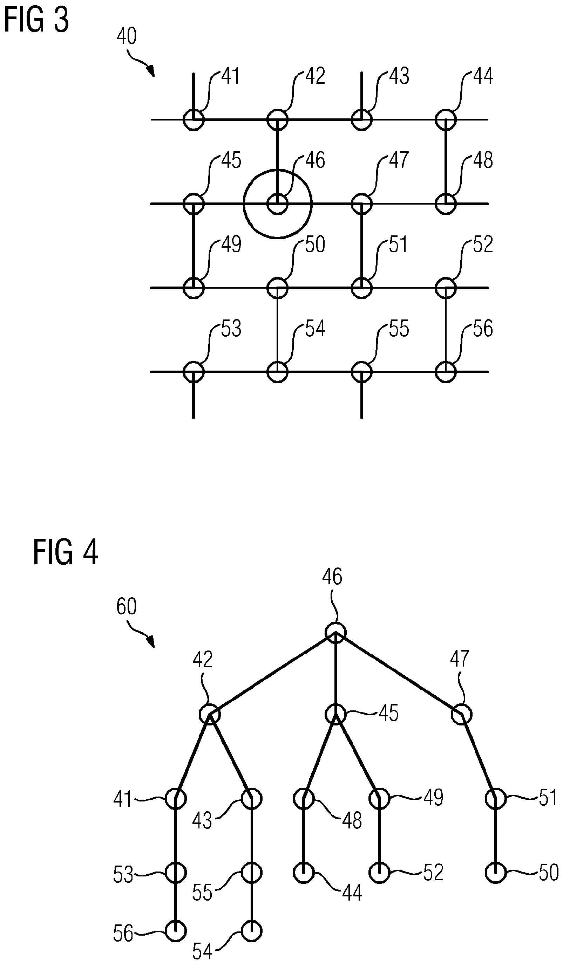

In Figur 3 ist ein Ausschnitt eines Steuerungssystems 40 dargestellt. Das Steuerungssystem 40 umfasst eine Vielzahl von Steuerungsmodulen 41-56. Jedes Steuerungsmodul 41-56 ist mit drei benachbarten Steuerungsmodulen mittels Kommunikationsleitungen verbunden. Beispielsweise ist ein erstes Steuerungsmodul 41 mit einem zweiten Steuerungsmodul 42, einem vierten Steuerungsmodul 44 sowie mit einem dreizehnten Steuerungsmodul 53 verbunden. Ein sechstes Steuerungsmodul 46 ist als Masterknoten definiert. Es ist mittels einer weiteren Kommunikationsleitung mit einer zentralen Steuerungseinrichtung verbunden (in Figur 3 grafisch nicht dargestellt). Ferner ist das sechste Steuerungsmodul 46 mit einem zweiten Steuerungsmodul 42, einem fünften Steuerungsmodul 45 und einem siebten Steuerungsmodul 47 verbunden. Die Steuerungsmodule 41-56 bilden damit zusammen mit den Kommunikationsleitungen zwischen ihnen ein Verbindungsnetzwerk des Steuerungssystems.

Die Steuerungsmodule 41-56 des Verbindungsnetzwerks bilden ein Kommunikationsnetzwerk in der folgenden Weise aus. Der Masterknoten 46 empfängt die Daten direkt von der zentralen Steuerungseinrichtung und bildet damit eine nullte Ebene des Kommunikationsnetzwerks. Die zum Masterknoten benachbarten Steuerungsmodule 42, 45 und 47 bilden eine erste Ebene des Kommunikationsnetzwerks jeweils mit dem Masterknoten als übergeordnetem Steuerungsmodul. Alle anderen Steuerungsmodule entscheiden aufgrund der empfangenen Daten von ihren jeweiligen benachbarten Steuerungsmodulen, welches Steuerungsmodul sie als übergeordnetes Steuerungsmodul auswählen. Da die Datenübermittlung getaktet erfolgt, kann die Zeitverzögerung anhand einer Taktzählung durchgeführt werden. Dies soll anhand eines elften Steuerungsmoduls 51 erläutert werden. Das elfte Steuerungsmodul 51 ist mittels entsprechender Kommunikationsleitungen mit dem siebten Steuerungsmodul 47, einem zehnten Steuerungsmodul 50 sowie mit einem zwölften Steuerungsmodul 52 verbunden. Die vom siebten Steuerungsmodul 47 empfangenen Daten weisen eine Zeitverzögerung von zwei Takten auf. Die vom zehnten Steuerungsmodul 50 empfangenen Daten weisen eine Zeitverzögerung von vier Takten auf. Die vom zwölften Steuerungsmodul 52 empfangenen Daten weisen eine Zeitverzögerung von ebenfalls vier Takten auf (hier gehen die Daten den Weg über die Steuerungsmodule 46, 45, 49 und 52). Als das übergeordnete Steuerungsmodul soll dasjenige mit der kleinsten Zeitverzögerung gewählt werden. Demzufolge wählt das elfte Steuerungsmodul 51 das siebte Steuerungsmodul 47 als das übergeordnete Steuerungsmodul aus. Diese Wahl wird dem übergeordneten Steuerungsmodul (in diesem Fall dem siebten Steuerungsmodul 47) mitgeteilt. Damit ist eine Verbindung im Kommunikationsnetzwerk geschaffen. Entsprechend wird für alle Steuerungsmodule eine entsprechende Auswahl durchgeführt bis alle (funktionsfähigen) Steuerungsmodule dem Kommunikationsnetzwerk angeschlossen sind. Die Verbindungen des auf diese Weise geschaffenen Kommunikationsnetzwerks sind in Figur 3 durch Verdickung der Linien zwischen den Steuerungsmodulen angedeutet.

Figur 4 zeigt ein hierarchisches Kommunikationsnetzwerk 60 des Beispiels der Figur 3. Die Baumstruktur des Kommunikationsnetzwerks 60 ist erkennbar. Der Masterknoten 46 bündelt den Datenaustausch. Die übrigen Knoten des Kommunikationsnetzwerks entsprechen den Steuerungsmodulen 41-55 in der verzweigten Baumstruktur. Bei einem Ausfall einer Kommunikationsleitung oder eines Steuerungsmoduls 41-55 kann zeitnah eine neue Baumstruktur bzw. ein neues Kommunikationsnetzwerk aufgebaut werden.

## Patentansprüche

1. Verfahren zum Steuern steuerbarer Leistungshalbleiterschalter einer Umrichteranordnung (1) mit einer Vielzahl von Schaltmodulen (26-28) mit steuerbaren Leistungshalbleiterschaltern, bei dem
ein Steuerungssystem (35, 40) bereitgestellt wird, das zum Ansteuern der Leistungshalbleiterschalter der Schaltmodule (26-28) eingerichtet ist, wobei das Steuerungssystem ausgestattet ist mit einer zentralen Steuerungseinrichtung (30) und
- einer Vielzahl von Steuerungsmodulen (32-34, 41-56), die jeweils einer der zu steuernden Schaltmodulen (26-28) zugeordnet sind, wobei
die zentrale Steuerungseinrichtung (30) zum Austausch digitaler Daten mit jedem Steuerungsmodul (32-34, 41-56) eingerichtet ist, wobei
die Steuerungsmodule (32-34, 41-56) ein Verbindungsnetzwerk bilden, wobei jedes Steuerungsmodul (32-34, 41-56) mit mehr als einem weiteren Steuerungsmodul (32-34, 41-56) über eine Kommunikationsleitung direkt verbunden ist, so dass ein Datenaustausch zwischen ihnen möglich ist,
eines der Steuerungsmodule (32-34, 41-56) als Masterknoten (31, 46) des Verbindungsnetzwerks direkt mit der zentralen Steuerungseinrichtung (30) verbunden ist, und wobei
die Steuerungsmodule (32-34, 41-56) dazu eingerichtet sind, ein Kommunikationsnetzwerk (60) innerhalb des Verbindungsnetzwerks auszubilden, so dass der Datenaustausch zwischen der zentralen Steuerungseinrichtung (30) und jedem Steuerungsmodul (32-34, 41-56) über einen diesem Steuerungsmodul (32-34, 41-56) zugeordneten Kommunikationsweg innerhalb des Kommunikationsnetzwerks (60) durchführbar ist, wobei
jedes der Steuerungsmodule selbsttätig unter allen mit ihm verbundenen Steuerungsmodulen eines als das übergeordnete Steuerungsmodul festlegt, von dem es im Betrieb des Steuerungssystems Daten empfängt, wobei
jedem der Schaltmodule (26-28) ein Steuerungsmodul (32-34, 41-56) zugeordnet wird und
die Steuerung der Leistungshalbleiterschalter mittels des Steuerungssystems (35, 40) durchgeführt wird, wobei
die Steuerungsmodule (32-34, 41-56) ein hierarchisches Kommunikationsnetzwerk mit einer Baumstruktur innerhalb des Verbindungsnetzwerks ausbilden, und
der Datenaustausch zwischen der zentralen Steuerungseinrichtung (30) und jedem Steuerungsmodul (32-34, 41-56) über einen diesem Steuerungsmodul (32-34, 41-56) zugeordneten Kommunikationsweg im Kommunikationsnetzwerk erfolgt.

2. Verfahren nach Anspruch 1, wobei die Datenübertragung getaktet erfolgt, mit einer Taktverzögerung von weniger als 10 Mikrosekunden.

3. Verfahren nach Anspruch 2, wobei für jedes der Steuerungsmodule der Kommunikationsweg festgelegt wird, indem eine kürzeste Übertragungszeit für dieses Steuerungsmodul ermittelt wird.

4. Verfahren nach einem der vorangehenden Ansprüche, wobei bei Ausfall eines der Steuerungsmodule oder einer der Kommunikationsleitungen das hierarchische Kommunikationsnetzwerk neu ausgebildet wird.

5. Umrichteranordnung mit einer Vielzahl von Schaltmodulen mit steuerbaren Leistungshalbleiterschaltern **gekennzeichnet durch** ein Steuerungssystem, das dazu ausgelegt ist, ein Verfahren nach einem der vorangehenden Ansprüche durchzuführen, wobei jedem der Schaltmodule ein Steuerungsmodul zugeordnet ist und das Steuerungssystem zum Ansteuern der Leistungshalbleiterschalter der Schaltmodule eingerichtet ist.

6. Umrichteranordnung nach Anspruch 5, wobei jedes Steuerungsmodul (41-56) dazu eingerichtet ist, eine Übertragungszeit von Daten auszuwerten, die dieses Steuerungsmodul (41-56) von unterschiedlichen im Verbindungsnetzwerk benachbarten Steuerungsmodulen (41-56) empfängt, so dass ein kürzester Kommunikationsweg für jedes Steuerungsmodul (41-56) ermittelbar ist.

7. Umrichteranordnung nach einem der vorangehenden Ansprüche, wobei die Kommunikationsleitungen Lichtwellenleiter sind.

8. Umrichteranordnung nach einem der vorangehenden Ansprüche, wobei die Steuerungsmodule (41-56) zum digitalen Verarbeiten der Daten ausgebildet sind.

9. Umrichteranordnung nach einem der vorangehenden Ansprüche, wobei jedes Steuerungsmodul (41-56) mit drei weiteren Steuerungsmodulen (41-56) verbunden ist.

10. Umrichteranordnung nach einem der vorangehenden Ansprüche, wobei die Steuerungsmodule (41-56) zu einem bidirektionalen Datenaustausch eingerichtet sind.

## Claims

1. Method for controlling controllable power semiconductor switches of a converter assembly (1) with a multiplicity of switching modules (26-28) having controllable power semiconductor switches, in which
a control system (35, 40) is provided, which is set up to control the power semiconductor switches of the switching modules (26-28), wherein the control system is equipped with a central control device (30) and
- a multiplicity of control modules (32-34, 41-56), each of which is assigned to one of the switching modules (26-28) to be controlled, wherein
the central control device (30) is set up to exchange digital data with each control module (32-34, 41-56), wherein
the control modules (32-34, 41-56) form a connection network, wherein each control module (32-34, 41-56) is directly connected to more than one other control module (32-34, 41-56) via a communication line, so that data exchange between them is possible,
one of the control modules (32-34, 41-56), as the master node (31, 46) of the connection network, is directly connected to the central control device (30), and wherein
the control modules (32-34, 41-56) are set up to form a communication network (60) within the connection network so that the data exchange between the central control device (30) and each control module (32-34, 41-56) can be carried out via a communication path assigned to this control module (32-34, 41-56) within the communication network (60), wherein
each of the control modules automatically defines one of all of the control modules connected to it as the superordinate control module, from which it receives data during operation of the control system, wherein
a control module (32-34, 41-56) is assigned to each of the switching modules (26-28), and
the control of the power semiconductor switches is carried out by means of the control system (35, 40), wherein
the control modules (32-34, 41-56) form a hierarchical communication network with a tree structure within the connection network, and
the data exchange between the central control device (30) and each control module (32-34, 41-56) takes place via a communication path assigned to this control module (32-34, 41-56) within the communication network.

2. Method according to Claim 1, wherein the data transmission is clocked, with a clock delay of less than 10 microseconds.

3. Method according to Claim 2, wherein the communication path is determined for each of the control modules by determining a shortest transmission time for this control module.

4. Method according to one of the preceding claims, wherein, in case of failure of one of the control modules or one of the communication lines, the hierarchical communication network is established again.

5. Converter assembly with a multiplicity of switching modules having controllable power semiconductor switches, **characterized by** a control system which is designed to carry out a method according to one of the preceding claims, wherein a control module is assigned to each of the switching modules and the control system is set up to control the power semiconductor switches of the switching modules.

6. Converter assembly according to Claim 5, wherein each control module (41-56) is set up to evaluate a transmission time of data that this control module (41-56) receives from different adjoining control modules (41-56) within the connection network so that a shortest communication path can be determined for each control module (41-56).

7. Converter assembly according to one of the preceding claims, wherein the communication lines are fibre optic cables.

8. Converter assembly according to one of the preceding claims, wherein the control modules (41-56) are designed to digitally process the data.

9. Converter assembly according to one of the preceding claims, wherein each control module (41-56) is connected to three other control modules (41-56).

10. Converter assembly according to one of the preceding claims, wherein the control modules (41-56) are set up for two-way data exchange.

## Revendications

1. Procédé de commande d'interrupteurs à semi-conducteur de puissance pouvant être commandés d'un dispositif (1) convertisseur, ayant une pluralité de modules (26 à 28) de coupure à interrupteurs à semi-conducteur de puissance pouvant être commandés, dans lequel
on se procure un système (35, 40) de commande, qui est conçu pour commander les interrupteurs à semi-conducteur de puissance des modules (26 à 28) de coupure, le système de commande étant équipé d'un dispositif (30) central de commande et
- d'une pluralité de modules (32 à 34, 41 à 56) de commande, qui sont associés chacun à l'un des modules (26 à 28) de coupure à commander,
le dispositif (30) central de commande étant conçu pour échanger des données numériques avec chaque module (32 à 34, 41 à 56) de commande,
les modules (32 à 34, 41 à 56) de commande formant un réseau de liaison, chaque module (32 à 34, 41 à 56) de commande étant relié directement à plus d'un autre module (32 à 34, 41 à 56) de commande par une ligne de communication de manière à ce qu'un échange de données entre eux soit possible,
l'un des modules (32 à 34, 41 à 56) de commande étant relié en tant que nœud (31, 46) maître du réseau de liaison directement avec le dispositif (30) central de commande et dans lequel
les modules (32 à 34, 41 à 56) de commande sont conçus pour constituer un réseau (60) de communication au sein du réseau de liaison de manière à pouvoir effectuer l'échange de données entre le dispositif (30) central de commande et chaque module (32 à 34, 41 à 56) de commande par une voie de communication, associé à ce module (32 à 34, 41 à 56) de commande, au sein du réseau (60) de communication,
dans lequel
chacun des modules de commande fixe automatiquement entre autres avec des modules de commande qui lui sont reliés l'un d'entre eux comme module de commande supérieur hiérarchiquement, dont il reçoit des données en fonctionnement du système de commande, dans lequel
on associe un module (32 à 34, 41 à 56) de commande à chacun des modules (26 à 28) de coupure et
on effectue la commande des interrupteurs à semi-conducteur de puissance au moyen du système (35, 40) de commande, dans lequel
les modules (32 à 34, 41 à 56) de commande constituent un réseau de communication hiérarchique ayant une structure arborescente au sein du réseau de liaison, et
l'échange de données entre le dispositif (30) central de commande et chaque module (32 à 34, 41 à 56) de commande s'effectue par une voie de communication, associée à ce module (32 à 34, 41 à 56) de commande, du réseau de communication.

2. Procédé suivant la revendication 1, dans lequel la transmission de données s'effectue en cadence avec une temporisation de cadence de moins de 10 microsecondes.

3. Procédé suivant la revendication 2, dans lequel on fixe pour chacun des modules de commande la voie de communication en déterminant un temps de transmission le plus court pour ce module de commande.

4. Procédé suivant l'une des revendications précédentes, dans lequel, si l'un des modules de commande est défaillant ou si l'une des lignes de communication est défaillante, on reconstitue le réseau de communication hiérarchique.

5. Agencement de convertisseur ayant une pluralité de modules de coupure à interrupteurs à semi-conducteur de puissance pouvant être commandés, **caractérisé par** un système de commande qui est conçu pour effectuer un procédé suivant l'une des revendications précédentes, un module de commande étant associé à chacun des modules de coupure et le système de commande étant conçu pour commander les interrupteurs à semi-conducteur de puissance des modules de coupure.

6. Agencement de convertisseur suivant la revendication 5, dans lequel chaque module (41 à 56) de commande est conçu pour exploiter un temps de transmission de données que ce module (41 à 56) de commande reçoit de modules (41 à 56) de commande différents, voisins dans le réseau de liaison, de manière à pouvoir déterminer une voie de communication la plus courte pour chaque module (41 à 56) de commande.

7. Agencement de convertisseur suivant l'une des revendications précédentes, dans lequel les lignes de communication sont des fibres optiques.

8. Agencement de convertisseur suivant l'une des revendications précédentes, dans lequel les modules (41 à 56) de commande sont constitués pour le traitement numérique des données.

9. Agencement de convertisseur suivant l'une des revendications précédentes, dans lequel chaque module (41 à 56) de commande est relié à trois autres modules (41 à 56) de commande.

10. Agencement de convertisseur suivant l'une des revendications précédentes, dans lequel les modules (41 à 56) de commande sont conçus pour un échange de données bidirectionnel.
